(19) Europäisches Patentamt
European Patent Office
Office européen des brevets

(11) **EP 2 541 192 A1**

(12) **EUROPEAN PATENT APPLICATION**

(43) Date of publication:
**02.01.2013 Bulletin 2013/01**

(51) Int Cl.:
**G01B 9/02** *(2006.01)*  **G01B 11/16** *(2006.01)*
**G03H 1/00** *(2006.01)*

(21) Application number: **12170765.7**

(22) Date of filing: **04.06.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.06.2011  US 201113172061**

(71) Applicant: **United Technologies Corporation Hartford, CT 06101 (US)**

(72) Inventors:
• **Belousov, Igor V.
  08650 Kiev (UA)**
• **Barabash, Yuriy M.
  02095 Kiev (UA)**
• **Kononenko, Yuriy G.
  01021 Kiev (UA)**
• **Nikolenko, Andrii S.
  03118 Kiev (UA)**

(74) Representative: **Tomlinson, Kerry John Dehns
St Bride's House
10 Salisbury Square
London
EC4Y 8JD (GB)**

(54) **Interferometry-based stress analysis**

(57)     A method comprises illuminating a sample (14) with a coherent source (11), generating a first interference image of the sample, inducing a phase shift in the coherent source, generating a second interference image of the sample, inducing a load on the sample, generating a third interference image of the sample, and generating a phase distribution based on the interference images. The first interference image represents surface stress in the sample (14), the second interference image includes carrier fringes based on the phase shift, the third interference image represents a change in the surface stress due to the load, and the phase distribution represents the change in the surface stress.

FIG. 1

EP 2 541 192 A1

**Description**

BACKGROUND

This invention relates generally to manufacturing, and specifically to non-destructive techniques for inspecting high-precision parts including gas turbine engine components. In particular, the invention concerns interferometry techniques for surface quality distributions and stress analysis, as applicable to turbine airfoils and other precision components with low-tolerance surface features and protective coatings.

SUMMARY

This invention concerns a non-contact testing method and related systems. According to a first aspect of the invention, the method includes illuminating a sample with a coherent source, generating a first interference image of the sample, inducing a phase shift in the coherent source, generating a second interference image, inducing a load on the sample, generating a third interference image.

The first interference image represents surface stress in the sample. The second interference image includes carrier fringes based on the phase shift. The third interference image represents a change in the surface stress, due to the load. A phase distribution is generated based on the interference images, where the phase distribution represents the change in the surface stress.

According to a second aspect of the invention, there is provided a testing method comprising: illuminating a sample part with a first coherent light source; combining the first coherent light source with a second coherent light source to generate a first interference pattern, the first interference pattern representing a surface of the part; inducing a phase shift in the second coherent light source to generate a second interference pattern, the second interference pattern including carrier fringes based on the phase shift; inducing a load on the sample part to generate a third interference pattern, the third interference pattern representing surface stresses due the load; and generating a phase portrait of the sample part based on the first, second and third interference patterns, wherein the phase portrait represents displacements in the surface due to the surface stresses.

According to a third aspect of the invention, there is provided a system comprising: a sample; a coherent light source configured to illuminate the sample to generate interference images; a detector configured to record the interference images, wherein the interference images representing a surface of the sample; a wave plate configured to induce a phase shift in the coherent light source, the phase shift inducing carrier fringes into the interference images; a heater configured to induce thermal stress in the sample, the thermal stress inducing displacements in the surface; and a processor configured to generate a phase distribution based on the interference images, the phase distribution representing the displacements.

BRIEF DESCRIPTION OF THE DRAWINGS

FIG. 1 is a schematic diagram of an interferometer system, in a holographic interference configuration.
FIG. 2A is a holographic interference image of a sample part.
FIG. 2B is a holographic interference image of the sample part in an unloaded state, with carrier fringes.
FIG. 2C is a holographic interference image of the sample part in a loaded state, with carrier fringes.
FIG. 3A is a plot of relative fringe intensity versus axial position for the unloaded state of FIG. 2B.
FIG. 3B is a plot of relative fringe intensity versus axial position for the loaded state of FIG. 2C.
FIG. 3C is a plot of relative phase versus axial position for the unloaded state of FIG. 2B.
FIG. 3D is a plot of relative phase versus axial position for loaded state of FIG. 2C.
FIG. 4A is a Fourier spectrum of intensity along a central section of the interference image in FIG. 2B, in an unloaded state.
FIG. 4B is a Fourier spectrum of intensity along a central section of the interference image in FIG. 2C, in a loaded state.
FIG. 5 is a schematic diagram of the interferometer system, in a speckle interferometry configuration.
FIG. 6A is a speckle interference image of a coated part, in an unloaded state.
FIG. 6B is a speckle interference image of the coated part, in a loaded state.
FIG. 6C is a speckle interference image of the coated part in the unloaded state, with a frequency filter.
FIG. 6D is a speckle interference image of the coated part in the loaded state, with a frequency filter.
FIG. 7A is a phase portrait for a coated part in an unloaded state, illustrating normal surface displacements.
FIG. 7B is a phase portrait for the coated part in a loaded state, showing stress deformation in the normal direction.
FIG. 7C is a phase portrait for a coated part in an unloaded state, illustrating tangential surface displacements.
FIG. 7D is a phase portrait for the coated part in a loaded state, showing stress deformation in the tangential direction.

DETAILED DESCRIPTION

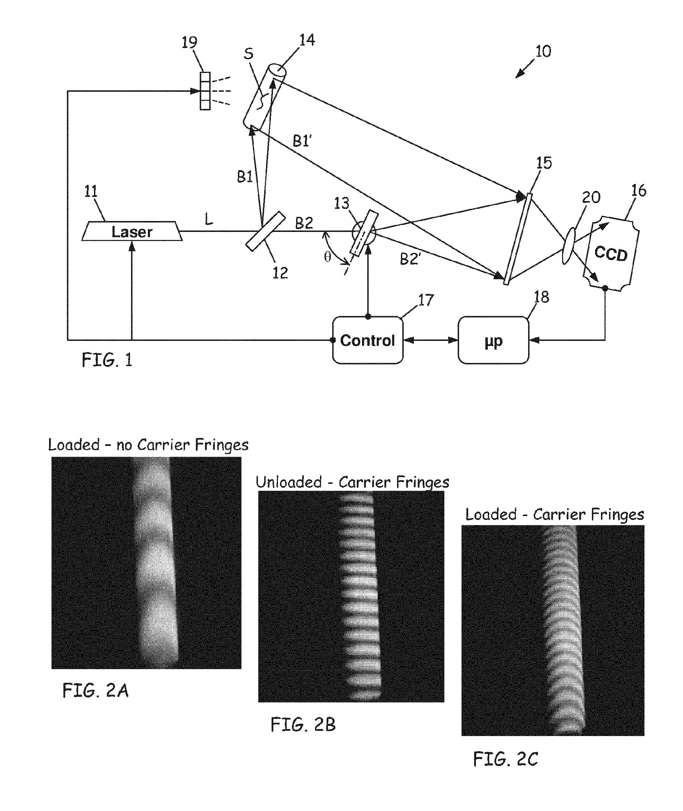

FIG. 1 is a schematic diagram of interferometer system 10, in a holographic interference configuration. System 10 includes laser source 11, optical splitter 12, phase plate 13, sample part 14, holographic medium 15, photosensitive detector 16, controller 17, processor 18 and heater 19.

Laser source 11 includes a coherent light emitter for generating laser beam (coherent light) L, in either pulsed or continuous-wave mode. In one configuration, laser source 11 includes a 658 nm laser diode operating at 50 mW. Alternatively, the wavelength and power output vary, for example with wavelength from 635 nm to 650 nm, or between about 400 nm and about 800 nm, and with power output from 10 to 100 mW, or up to 250 mW or more.

Optical splitter 12 includes a beam splitter for splitting source beam L from laser 11 into two separate laser beams (coherent sources) B1 and B2, with coherent light propagation along different directions toward sample part 14 and phase plate 13, respectively. Depending on configuration, splitter 12 may include a polarizing beam splitter such as a Wollaston prism, so that light has different linear polarizations in coherent beams B1 and B2, or an achiral layered structure, so that light has different circular polarizations in coherent beams B1 and B2. Alternatively, splitter 12 includes a half-silvered mirror or a pair of non-polarizing triangular prisms, and light has substantially the same polarization in coherent beams B1 and B2, or no particular polarization.

Phase plate 13 includes an optical element to provide a phase delay between two different optical components, for example a birefringent crystal with fast and slow optical axes oriented to delay one plane polarization in beam B1 with respect to a perpendicular (second) plane polarization in beam B2. In quarter-wave and half-wave configurations, phase plate 13 provides a phase shift of one quarter or one half of a wavelength (or cycle), respectively. In general, however, the magnitude of the phase shift depends on the optical thickness of phase plate 13, and the relative phase shift (or delay) can be adjusted by changing angle $\theta$ of phase plate 13 with respect to beam B2.

Sample part (or sample) 14 can be either a reference (test) component or a precision part, for example a blade or vane airfoil for a gas turbine engine. Sample part 14 typically includes a protective coating or other low-tolerance surface S, for example a thermal barrier coating (TBC), a metallic (e.g., NiCrAlY) coating, or another low-tolerance coating or precision surface.

Optical medium 15 includes a holographic medium illuminated by reflected beam B1' and phase-delayed reference beam B2', which combine to form an interference pattern. Depending on configuration, holographic medium 15 may include a reversible holographic film or a polymer-based read/write/erase optical memory medium for recording the interference pattern as a holographic image. Alternately, holographic medium 15 includes a registration chamber with a thermoplastic top layer for recording (or registering) the interference pattern, or a thermoplastic registration chamber with a photorefractive crystal medium or a photosensitive polymeric medium for recording a holographic image.

Detector 16 includes a charge-coupled device (CCD) or other photosensitive detector configured to record an interference pattern or holographic image formed in holographic medium 15, or other optical information. Depending on configuration, detector 16 may utilize one or more lenses 20 to focus a holographic image from holographic medium 15, or detector 16 may collect optical data by transmission or reflection. In general, system 10 also includes additional lenses, beam spreaders, mirrors and other optical components to control the width, direction and intensity of beams L, B1 and B2, and to increase or decrease illumination across sample part 14, holographic medium 15 and detector 16.

Controller 17 includes actuators and electronic switches configured to control various other components of interferometer system 10, including laser source 11, phase plate 13 and heater 19. In particular, controller 17 directs laser source 11 to turn on and off, or to pulse source beam L, and controller 17 directs phase plate 13 to rotate within reference beam B2, changing setting angle $\theta$ to adjust the phase delay of beam B2 with respect to beam B1. Controller 17 also turns heater 19 on and off, in order to control thermal loading on sample part 14.

Microprocessor ($\mu$p) 18 analyzes the data from CCD 16, in order to reproduce surface stress patterns based on the interference images generated by reflected beams B1' and phase-delayed beam B2' in holographic medium 15. Depending on configuration, microprocessor (or processor) 18 also includes software and hardware to direct operation of controller 17.

Heater 19 includes a resistive or radiant heating element such as a quartz heater, which is configured to regulate thermal loading on sample part 14. In particular, heater 19 is configured to heat sample part 14 from an ambient temperature of about 20 °C (or 68 °F) to a thermal loading temperature of about 30-50 °C (86-122 °F). Alternatively, the ambient temperature range is about 0-25 °C (32-77 °F), and the thermal loading temperature ranges up to 50-70 °C (122-158 °F).

Thermal loading is accomplished by positioning heater 19 relatively close to sample part 14, and operating heater 19 for a period of one to ten minutes, more or less, for example about six minutes. The power output of heater 19 is relatively low, and the resulting temperature and thermal loading on sample part 14 are relatively moderate. This contrasts with other systems, in which testing requires extensive thermal or mechanical loading and heating to temperatures above 100 °C (or 212 °F), which can damage sensitive components of sample part 14.

In operation of system 10, processor 18 directs controller 17 to pulse (or turn on) laser source 11, generating source beam L. Beam splitter 12 splits source beam L into first (sampling) beam B1, which illuminates surface (or coating) S of sample part 14, and second (reference) beam B2, which passes through phase plate 13. Reflected illuminating beam B1' is incident from surface S of sample part 14 onto holographic medium 15, where it combines with phase-shifted reference beam B2' from phase plate 13 to produce a holographic image or other interference pattern.

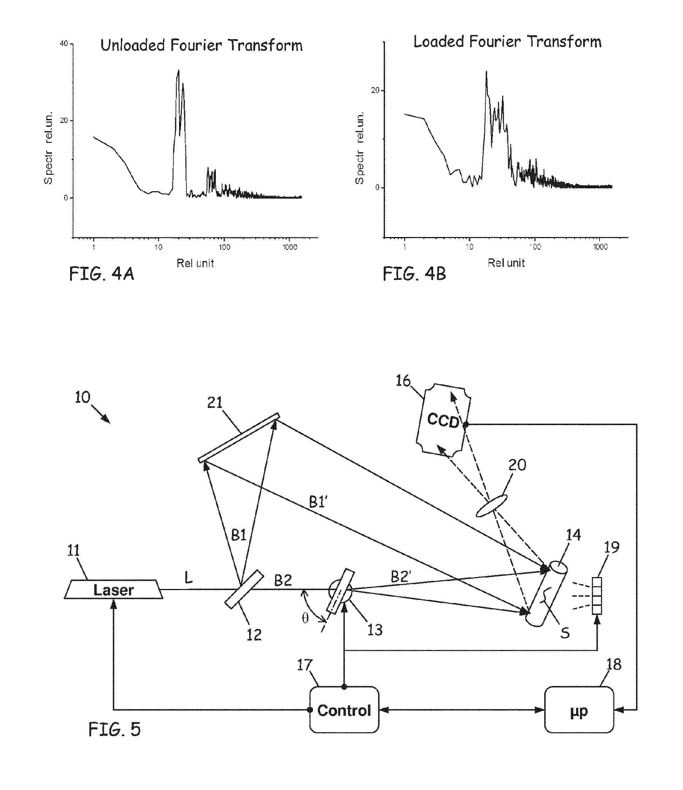

Detector 16 records the interference pattern as a function of intensity and surface (x,y) position, based on the photon count in each pixel in the CCD array. In the configuration of FIG. 1, this is accomplished by transmission through holographic medium 15, with or without lens 20 to form an image on the photosensitive surface of detector 16. Alternatively, the interference pattern is recorded by collecting light reflected from sample part 14 (see, e.g., FIG. 5, below).

A second image is formed by rotating phase plate 13 to angle $\theta$ with respect to sampling beam B2, altering the phase shift of sampling beam B2' to introduce carrier fringes into the interference pattern. A third image is formed after activating heater 19 to place sample part 14 under a thermal load.

Microprocessor (or computer processor) 18 analyses the optical data stored on detector 16, in order to locate stress defects and other surface features on sample part 14. Processor 18 also directs controller 17 to actuate the various components of holographic interferometer system 10, including laser source 11, wave plate 13 and heater 19, as described above.

System 10 compares holographic fringe patterns for two different conditions of sample part 14 with coating S, before heating (initial condition; cool) and after heating (final condition; hot). The mechanical stress ($\sigma_S$) on coating S is:

$$\sigma_S = \sigma_T + \sigma_I, \qquad\qquad [1]$$

where $\sigma_I$ is the internal stress caused by deposition of the coating, and $\sigma_T$ is the thermal stress produced by differences in the coefficient of thermal-expansion (CTE) for the substrate and coating materials.

Thermal stress $\sigma_T$ can be written in terms of the coefficients of thermal expansion of the coating ($\alpha_F$) and substrate ($\alpha_S$), respectively:

$$\sigma_T = (\alpha_F - \alpha_S) \cdot \Delta T \cdot E, \qquad\qquad [2]$$

where $\Delta T$ is temperature gradient or difference in temperature of the coating with respect to the substrate, as defined during deposition of the coating, and E is elastic modulus of the coating material.

Upon (isothermal) heating of sample part 14, mechanical stresses $\sigma_S$ result in elastic deformation of the surface, and a surface relief pattern forms. Interference system 10 obtains fringe patterns that represent the surface stresses and corresponding relief (displacement) pattern on the surface of sample part 14, using a carrier interference fringe technique.

The advantages of this technique lie in the fact that carrier fringes reduce or eliminate zero fringe effects, allowing processor 16 to determine a working fringe number and reconstruct 3-dimensional phase portraits across surface S of sample part 14. The phase portraits generate more precise displacements, because phase measurements have higher accuracy than direct determinations based on the order and location of the interference fringes.

System 10 also produces a monotonic phase distribution over the surface of sample part 14, allowing processor 16 to perform an automated computer analysis of the resulting fringe pattern. In addition, system 10 provides for reconstruction and analysis of the phase relief pattern (phase distribution) in the surface of the part being inspected, introducing the standard deviation and z-score distribution analysis of the width and magnitude of the phase distribution as a criterion for inspecting part surface quality.

Phase characteristics are determined by transforming real intensity values reconstructed from the interference image of sample part 14 into a complex-valued function. The transformation is realized by means of direct and inverse (or reverse) Fourier and Hilbert transformations of the intensity distributions on detector 16, as described below.

When stress defects occur in sample part 14, the interference fringe pattern is shifted or altered, making it possible to locate stress-critical regions of surface S. System 10 determines the relevant characteristics of the stress defects by analysis of the interference fringe shift, using processor 18. The cycle time is a few seconds or less, allowing for repeated real-time interference analysis, using both holographic (FIG. 1) and speckle interference images (see FIG. 5, below).

Interferometer system 10 also provides highly accurate, easily interpreted data based on contactless measurements and non-destructive testing procedures, useful to a wide range of different sample parts 14 and coating materials S. In particular, system 10 provides local stress and defect (crack or blister) locations on coated airfoils and other precision parts, as well as efficient and reliable detection of weak coating zones, stress ridges and other precursors to stress-related failure modes.

In contrast to x-ray, sonic, magnetoelastic, and eddy current methods, interferometer system 10 also provides more accurate measurements, which are applicable to a wider range of substrates and coating materials. In contrast to gel-based silver halogenide emulsions and other "wet treatment" systems, moreover, interference images can be rapidly recorded, erased and re-recorded on reversible optical (holographic) medium 15, using digital imaging system (detector) 16 to increase speed and repeatability. System 10 also avoids the need to form indentations or drill holes into surface S of sample part 14, eliminating contact operations while providing a combination of holographic and speckle interference techniques to measure both normal and tangential components of the surface displacement, as described below.

FIG. 2A is a holographic interference fringe pattern (or interferogram) for a precision part such as an airfoil substrate or coated sample part 14, as described with respect to FIG. 1, above. As shown in FIG. 2A, the part is thermally loaded by heating to a uniform temperature of about 30 °C, or 86 °F.

Interference fringes appear as horizontal (cross) stripes in FIG. 2A. Because the fringe pattern is similar for compression and stretching deformations, however, it is difficult to determine the direction of displacement by analysis of FIG. 2A alone. It is also difficult to interpret distortions in the fringe pattern, because of the complexity of any association between particular fringes and specific locations on the surface of the part.

In FIG. 2B, the part is at an ambient temperature of 20 °C (68 °F), and carrier fringes are introduced by shifting the phase of the reference beam. FIG. 2C shows the interference pattern after thermally loading the part by heating to 30 °C (86 °F), with the same phase relationship. This carrier fringe technique allows the phase slope direction to be determined, providing for full phase portraits and associated three-dimensional reconstructions of the deformed surface.

Fringes are counted from top to bottom in FIGS. 2A-2C, along a vertical line. In the case of thermal loading, interference fringes caused by heating interact with the carrier fringes to increase or decrease the fringe frequency, enlarging or narrowing the distance between fringes, and allowing the fringe order to be determined.

Because the angle of the phase plate is known, the introduction of carrier fringes (and taking of multiple interference images) allows a three-dimensional image of the deformed part surface to be reconstructed, based on the fringe patterns in FIGS. 2B and 2C. The three-dimensional surface of the part represents the surface stress distribution, which can be also be analyzed by recording additional fringe patterns taken during the cooling process, and under different thermal or mechanical loads.

The carrier fringe frequency is determined by the value of the phase plate slope angle. That is, the carrier fringe frequency is determined by the phase shift, and the phase shift depends on angle θ of phase plate 13 with respect to reference (or carrier) beam B2, as shown in FIG. 1.

In general, the minimum carrier fringe frequency should be higher than the maximum fringe frequency appearing on the strained (heated) part, as shown FIG. 2A. Typically, the minimum carrier fringe frequency is a few times higher than the fringe frequency for the strained part, for example two to three times higher. The maximum carrier fringe frequency is limited by the speckle size of the fringe pattern for the strained part, at which point resolution is lost.

The process of holographic interference analysis based on carrier fringes includes the following steps. The steps are not presented in any particular sequence, and not all are necessarily required. In particular, results can also be achieved by performing some or all of these steps in a different order.

1. Recording a hologram of an unloaded (unheated) part. In one application the part is at a room or laboratory temperature of about 20 °C or 68 °F (FIG. 2A). In other applications the part is cooler, or warmer.

2. Introducing carrier fringes by shifting the phase of a reference beam used to record the hologram, with respect to the illuminating beam. In one application, the phase is shifted by rotating a phase plate located along the reference beam. The rotation can be about 20°, or more or less, either clockwise or counter-clockwise with respect to the reference beam direction.

3. Recording an interference pattern in the form of generally parallel (e.g., horizontal), artificially-introduced carrier fringes, which cover the surface of the unloaded part. In general, an initial-state interference image is obtained, with artificially introduced carrier fringes having higher spatial frequency than in the original image (compare, e.g., FIG. 2B, with carrier fringes, to FIG. 2A, without carrier fringes).

4. Loading the part to introduce mechanical stress, for example by heating. In one application, the part is heated for about six minutes using a quartz heater. The heating is typically moderate, with an increase of about 10 °C (or 18 °F), or up to 20-30° C (36-54 °F), resulting in a final (loaded) temperature of 30-50 °C (86-122 °F). Alternatively, the part is cooled, for example to a temperature of about 0° C (32 °F), or colder.

5. Recording an interference pattern showing the surface of the part, as displaced by the load (FIG. 2C). In one application, the load is a thermal load and the surface of the part has a coating, so that the interference pattern represents thermal stress in the part surface and associated displacement of the coating. Alternatively, stress-induced displacements are induced in the surface of the part itself, for example in a substrate.

6. Recording additional interference patterns as the part returns to the initial (unloaded) state. In one example, four additional interference images are recorded over the first two minutes (i.e, one every 30 seconds), with four more over the next four minutes (every 60 seconds), three more over the next six minutes (every 120 seconds), and six more over the next eighteen minutes (every 180 seconds).

This technique produces twenty different images over a total of 30 minutes, each of which is recorded by the CCD in real time and downloaded to the processor for analysis. Alternatively, the imaging rate and analysis time vary, and a different number of interference patterns are recorded.

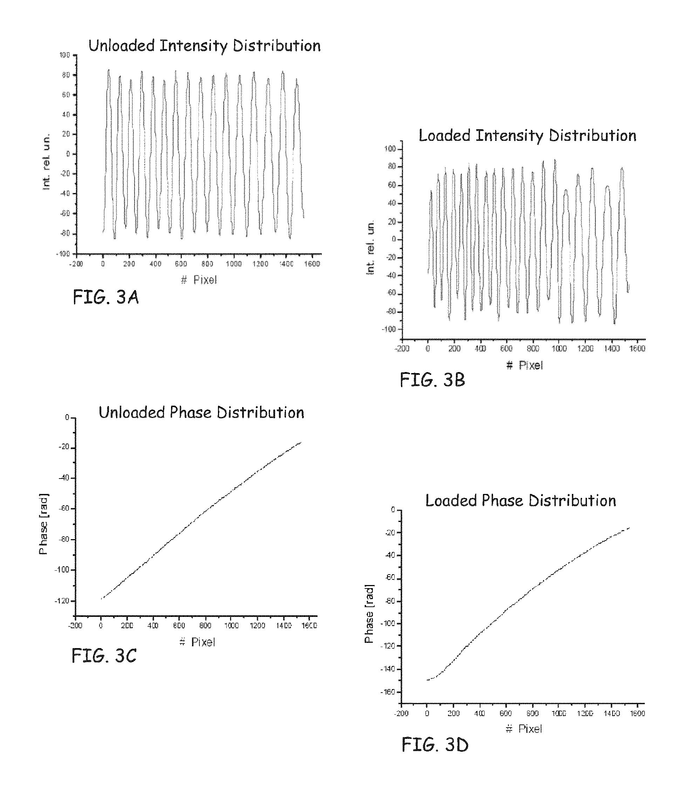

FIG. 3A is a plot of relative intensity versus axial position, for a cool (unloaded) part with carrier fringes included, as shown in FIG. 2B. FIG. 3B is a plot of relative intensity versus axial position for a heated (loaded) part, as shown in FIG. 2C.

In each of FIGS. 3A and 3B, the vertical (y) axis represents intensity, in arbitrary (relative) units. The intensity is determined by a CCD (or other photosensitive device), based on an interference image formed by transmission through a holographic medium, or by speckle interferometry. The horizontal (x) axis represents position along the surface of the sample part, for example from bottom to top along the vertical axis in FIGS. 2B and 2C, respectively. The position is given in arbitrary (dimensionless) units, based on pixel number in the CCD array.

As shown in FIG. 3A, the intensity distribution on the unloaded (cool) part is substantially sinusoidal. There is also a lower-frequency component due to the Gaussian character of the laser beam, at about three to four times the wavelength of the sinusoidal fringe pattern. FIG. 3B shows a shift in the fringe pattern due to (thermal) stress on the sample part.

FIG. 3C is a plot of relative phase versus axial position for the fringe distribution of FIG. 3A, with the part in a cool (unloaded) state. FIG. 3D is a plot of relative phase versus axial position for the fringe distribution of FIG. 3B, with the part in a heated (loaded) state.

In FIGS. 3C and 3D, the vertical (y) axis represents phase, in dimensionless units (radians). The horizontal axis (x) represents axial position along the part, from bottom to top, based on pixel number, as described above for FIGS. 3A and 3B.

FIG. 3C shows that the phase increases monotonically and substantially uniformly along the axis of the unloaded sample part, without a small curvature across the middle of the phase plot. FIG 3D shows more variation in the phase, indicating thermal stress and surface deformation in the loaded sample part.

The phase reconstructions of FIGS. 3C and 3D are based on the distribution of light intensity in the fringe plots of FIGS. 3A and 3B, respectively. In particular, the distribution of light intensity for an interference pattern with carrier fringes has the form:

$$I_0(x,y) = A_0(x,y) + B_0(x,y) \times \cos[\omega(x,y) + \varphi_0(x,y)], \qquad [3]$$

where $A_0(x,y)$ is the background illumination at point (x,y) on the surface of the part, and $B_0(x,y)$ is the fringe intensity. Fringe intensity $B_0(x,y)$ is modulated by a cosine function based on spatial frequency $\omega(x,y)$ of the carrier fringes and phase distribution $\varphi_0(x,y)$. The spatial frequency of the carrier fringes is defined in the vertical (y) direction, corresponding to the vertical axis in FIGS. 2B and 2C.

Loading deforms the surface of the sample part, giving:

$$I_m(x,y) = A_m(x,y) + B_m(x,y) \times \cos[\omega(x,y) + \varphi_0(x,y) + \Delta\varphi(x,y)]. \qquad [4]$$

In this expression, $\Delta\varphi(x,y)$ is the phase contribution due to the stress (or strain) distribution along the surface of the part. This is the component that is relevant to deformation and displacement, allowing three-dimensional surfaces to be reconstructed by determining $\Delta\varphi(x,y)$.

FIG. 4A is a Fourier spectrum of the intensity profile along a central section of the interference pattern in FIG. 2B, with the part in an unloaded (cool) state (see FIG. 3A). FIG. 4B is a Fourier spectrum of the intensity profile along a central section of the interference pattern in FIG. 2C, with the part in a loaded (heated) state (see FIG. 3B).

In FIGS. 4A and 4B, spatial spectra intensities $F_d(x,i\omega)$ are represented in relative (dimensionless) units along the vertical (y) axis, using a linear scale. The horizontal (x) axis represents frequency, also in arbitrary units, using a logarithmic scale.

The spatial spectra of FIGS. 4A and 4B are obtained from the loaded and unloaded intensity distributions of FIGS. 3A and 3B, above, by applying a Fourier transform to Equation 3 (representing the unloaded intensity distribution of FIG. 3A) and Equation 4 (representing the loaded intensity distribution of FIG. 3B). Contributions from background

illumination $A_m(x,y)$, fringe intensity $B_m(x,y)$ and phase shift $\Delta\varphi(x,y)$ vary relatively slowly in comparison to carrier frequency $\omega(x,y)$, so the Fourier spectrum has a peak at the carrier frequency.

A one-sided spectrum is obtained by nulling (zeroing or suppressing) spatial spectrum frequencies that lie outside the spectrum peaks at carrier frequencies $\omega(x,y)$. The one-sided spatial spectrum is the spectrum of an analytic function of a complex variable formed by adding the real intensity, as defined along a particular x or y coordinate, to an imaginary component based on the Hilbert transform of the intensity. For example:

$$\gamma(y) = I_x(y) + i \times \tilde{I}_x(y), \qquad\qquad [5]$$

where $\tilde{I}_x(y)$ is the Hilbert transform of real intensity $I_x(y)$. Real intensity $I_x(y)$ is defined along a (vertical) row at horizontal value x, and "i" is the square root of negative one. A corresponding function $\gamma(x)$ can also be defined for a horizontal intensity distribution, switching horizontal coordinate x and vertical coordinate y in the definition of real intensity $I_y(x)$ and its Hilbert transform $\tilde{I}_y(x)$.

The phase of the carrier fringes is determined by the arc tangent of the ratio of the imaginary and real parts:

$$\varphi_x(y) = \arctan\{Im[\gamma(y)]/Re[\gamma(y)]\}, \qquad\qquad [6]$$

where $\varphi_x(y)$ is the instantaneous phase of the carrier fringes along the selected (vertical) row defined by horizontal value x. Analytic function $\gamma(y)$ is obtained by applying a reverse Fourier transform to modified spatial spectra $F_d(x,i\omega)$ of FIGS. 4A and 4B, above.

Phase distribution $\varphi_x(y)$ is indefinite to within a factor of $2\pi$. This is due to the periodicity of the arc tangent function, as characterized by a phase jump from $-\pi$ to $+\pi$. The data analysis is designed to automatically find and eliminate these phase jumps, both along and in between vertical rows of the corresponding interference patterns.

Phase plots (FIGS. 3B and 3D) are obtained by sequential processing of each (vertical) row in the interferogram (or intensity plot), in order to determine $\varphi_x(y)$ for both unloaded (FIG. 2B) and loaded interference patterns (FIG. 2C), respectively. A full phase portrait, or two-dimensional phase distribution $\Delta\varphi(x,y)$, is obtained by combining the phase plots across the vertical rows, and actual part deformations are based on the difference between the loaded and unloaded phase plots. Phase portraits (or phase distributions) $\Delta\varphi(x,y)$ are statistically analyzed to generate standard deviations and z-score distributions. Values of the phase relief (in standard deviations) and the width of phase relief distribution are used as criteria in inspecting part surface quality, and parts are passed for use or rejected based on these criteria.

Quantitative values $\Delta r$ representing the vector displacement of points on the surface of a loaded part are thus found from phase distribution $\Delta\varphi(x,y)$:

$$\Delta\varphi(x,y) = (2\pi/\lambda) \times \Delta r(r_0-r), \qquad\qquad [7]$$

where $\lambda$ is the wavelength and $\Delta r$ is the (vector) displacement between initial (unloaded) and final (loaded) state. Vector displacement $\Delta r$ depends on wave vector $r_0$ of the illuminating radiation, and base vector r in the direction of observation.

FIG. 5 is a schematic diagram of interferometer system 10, in a speckle interferometer configuration. As shown in FIG. 5, system 10 includes laser source 11, optical splitter 12, phase plate 13, and sample part 14 with surface S, as described above. System 10 also includes CCD detector 16, controller 17, processor 18, heater 19 and mirror 21.

In operation of system 10, controller 17 directs laser source 11 to generate source beam L, in either continuous or pulsed beam mode. Beam splitter 12 splits source beam L into first (illuminating) beam B1 and second (reference) beam B2. Mirror 21 comprises a silvered surface or other specular reflector to reflect first beam B1 onto sample part 14, and phase plate 13 shifts the phase of second beam B2 with respect to first beam B1.

Reflected illuminating beam B1' and phase-shifted reference beam B2' combine to form a speckle interference pattern on surface (or coating) S of sample part 14. The interference pattern can be focused onto CCD 16 with one or more lenses 20, as shown in FIG. 5.

Phase plate 13 is then rotated to angle $\theta$, for example by about 20°, more or less, in order to shift the phase of reference beam B2' with respect to illuminating beam B1'. The phase delay introduces carrier fringes into the interference pattern, and a second image is generated with the carrier fringes.

Controller 17 activates heater 19 to place sample part 14 under a thermal load, and a third image is generated.

Detector 16 records each of the interference patterns, and microprocessor (or computer processor) 18 analyses the corresponding optical data, mapping the phase distribution across surface S of sample part 14 in order to quantify thermal deformations and locate stress defects.

In the double-beam speckle interferometry configuration of FIG. 5, interference system 10 illuminates surface S of sample part 14 with coherent fields (beams) B1' and B2' from two different directions. The phase of beam B2' is then changed to produce a second speckle pattern with the same average illumination, so that statistical characteristics of the resultant speckle pattern are the same as for the initial patterns.

Intensity I of the speckle pattern formed at sample part 14 can be written:

$$I_0 = a_1{}^2 + a_2{}^2 + 2a_1a_2 \times \cos(\Delta\varphi), \qquad [8]$$

where $a_1$ and $a_2$ are the (real) light wave amplitudes from beams B1' and B2', and $\Delta\varphi$ is the phase difference between the two beams. After loading sample part 14, the surface experiences stress displacement and the new speckle pattern intensity is:

$$I_m = a_1{}^2 + a_2{}^2 + 2a_1a_2 \times \cos(\Delta\varphi+\delta), \qquad [9]$$

where phase shift $\delta$ depends on the displacement of surface S on sample part 14, independent of the observation direction.

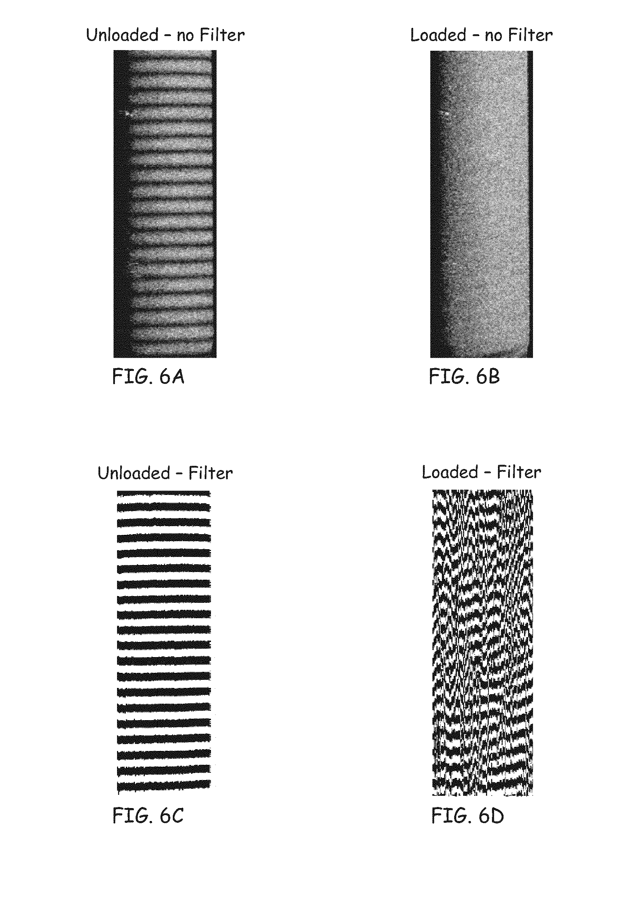

FIG. 6A is a speckle interference image of a coated part, in an unloaded (cool) state at about 20 °C, or 68 °F. FIG. 6B is a speckle interference image of the coated part a loaded (heated) state, at about 50 °C or 122 °F.

As with the holographic configuration of system 10, above, the speckle interferometer configuration utilizes a double-exposure method to analyze part deformations under relatively low temperature thermal stress. The initial part state is recorded as a speckle interferometry image with an initial phase difference $\Delta\varphi_1$ between illuminating beams B1' and B2', and a second reference image is obtained with a second phase difference $\Delta\varphi_2$.

A third (comparison) image is recorded after loading the part under thermal or mechanical stress. The third image is typically obtained without changing the relative phase, but it is also possible to use original phase $\Delta\varphi_1$, in which case the identities of the first and second reference images are reversed.

Speckle images are generated based on the intensity registered by the CCD, and converted to sets of matrix elements corresponding to the three different speckle pattern intensities. In this analysis, the matrix corresponding to the first reference image is subtracted from the matrices corresponding to the second reference image and the (third) comparison image, and the differential signal is squared.

In regions where speckle contrast does not change substantially between the two different images, the differential signal is close to zero and the region appears dark. In regions where the change is substantial, inverse contrast regions appear as bright speckle-modulated features (see FIGS. 6A-6D).

Dark fringes are thus fringes of constant (normal) displacement, as described by:

$$\ell_y = N\lambda / 2 \sin(\Delta\theta). \qquad [10]$$

In this expression, $\Delta\theta$ is the (average) angle between illuminating beams B1' and B2', and $\ell_y$ is the normal displacement. Using an optical scheme with two illuminating waveforms at different angles, system 10 can determine both normal and tangential displacements; that is, either along the direction of observation, or perpendicular to the direction of observation.

FIG. 6C is a speckle interference image of the coated part in the unloaded state, with a frequency filter. FIG. 6D is a speckle interference image of the coated part in the loaded state, with a frequency filter.

To improve visibility of the fringes, the interference pattern can be filtered to suppress high and low spatial frequencies. The results of such an interference filter are shown in FIGS. 6C and 6D, in which the interference fringes have increased visibility after application of a high and low frequency (or band-pass) filter to the data.

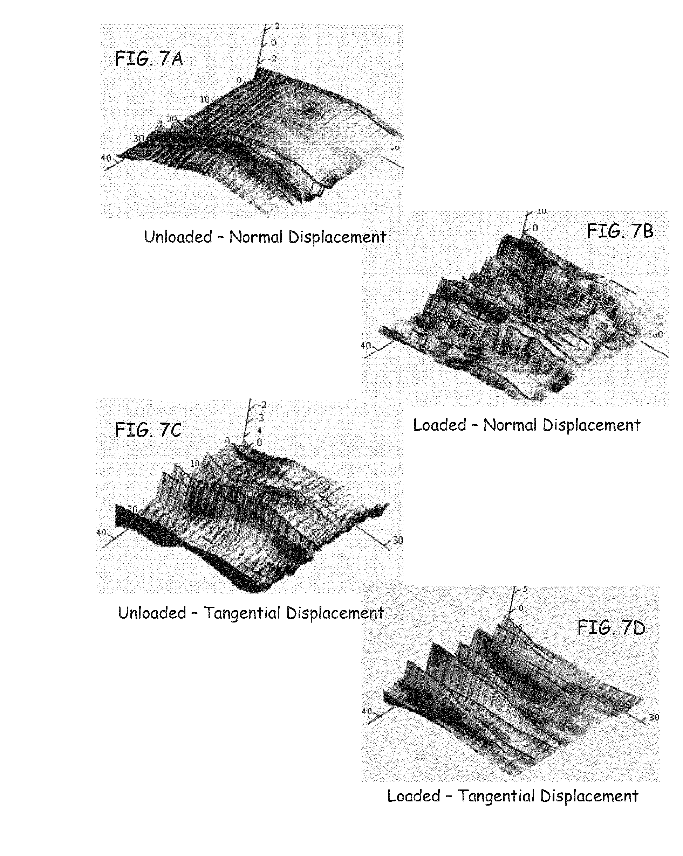

FIG. 7A is a phase portrait of a coated part, in an unloaded (cool) state at about 20 °C or 68 °F, illustrating normal surface displacements. FIG. 7B is a phase portrait of the coated part in a loaded (heated) state, at about 50 °C or 122 °F, showing thermal stress deformation in the normal direction.

FIGS. 7A and 7B show the results of phase portrait calculations for normal deformation due to thermal stress. The vertical axis represents a phase angle in dimensionless units (radians), which is related to the magnitude of the normal deformation (that is, along the direction of observation), as described above. The horizontal axes correspond to x and y positions along the surface of the part, also in arbitrary units, as related to pixel number.

In general, normal deformations increase with stress, even for relatively modest temperature increases of 10-30 °C, or 18-54 °F. The deformations appear as parallel lines or stress ridges along the surface, indicating critical regions where the coating may ultimately crack or blister, depending on the magnitude of the stress and associated thermal deformation.

FIGS. 7C and 7D are the corresponding phase plots for tangential displacements, perpendicular to the plane of observation. Again, deformations appear as parallel lines or stress ridges along the surface, and may indicate precursors to critical stress locations and stress-related failure points.

This algorithm provides speckle interference images and corresponding phase portraits for both normal and tangential surface displacements, making it possible to map three-dimensional surface stress distributions. The steps of the process are not presented in any particular sequence, however, and not all are necessarily required. In particular, results can also be achieved by performing some or all of these steps in a different order.

1. Illuminating a sample part with two laser beams at different angles, in order to generate a speckle interference pattern. In one application the sample part is coated, for example a turbine airfoil with a metal or ceramic thermal barrier coating. In other applications the sample part is uncoated, for example an uncoated airfoil substrate, or metal test cylinder.

2. Recording a first reference speckle interference image of the sample part in an unloaded (unheated) state. In one example the sample part is at a room or laboratory temperature of about 20 °C or 68 °F (FIG. 6A). In other examples the sample part is cooler, or warmer.

**[0102]** [0100] 3. Shifting a phase of one of the laser beams. In one example, the phase is shifted by rotating a phase plate located along one of the two laser beams. The rotation can be about 20°, or more or less, either clockwise or counter-clockwise with respect to the beam direction. In other examples the phase is shifted by introducing a quarter wave or half wave plate, or via a delay.

**[0103]** [0101] 4. Recording a second reference speckle interference image of the unloaded sample part. The speckle patterns are typically recorded by forming an image of the interference pattern on a photosensitive device such as a CCD, using a lens. Alternatively, the interference pattern is recorded by reflection or transmission onto the CCD.

5. Loading the sample part, for example by heating. In one application, the sample part is heated for six minutes using a quartz heater. The heating is typically moderate, yielding a temperature increase of about 10-30 °C (or 18-54 °F), with a loaded (final) temperature of about 30-50 °C (or 86-122 °F). Alternatively, the heating is more or less substantial, with a greater or lesser temperature difference, or loading is achieved by cooling or mechanical deformation.

6. Recording a comparison speckle interference pattern showing the surface of the sample part, as displaced by the load. In one example, the load is a thermal load and the surface of the sample part is a coating, allowing the interference analysis to detect cracks, blisters and other stress faults in the coating. Alternatively, stress-induced displacements are induced in the surface of the sample part itself, for example in the substrate of an airfoil, or in a test part.

7. Analyzing the images by converting the interference images into digital matrix form. The matrix values represent intensity for each of two reference images and the comparison image, as a function of pixel number. Matrix values for the first reference image can be subtracted from matrix values for the second reference image and the comparison image, and a spatial frequency filter can be applied to increase visibility of the resulting fringes.

8. Recording additional comparison speckle interference patterns as the sample part returns to the initial (unloaded) state. In one example, four additional speckle images are recorded over the first two minutes (i.e., every 30 seconds), four more over the next four minutes (every 60 seconds), three more over the next six minutes (every 120 seconds), and six more over the next eighteen minutes (every 180 seconds). This produces twenty different images over a total of 30 minutes, each of which is recorded by the CCD in real time and downloaded to the processor for analysis.

Alternatively, the imaging rate and analysis time vary, and a different number of interference patterns is recorded. In addition, the sample part can be thermally loaded by heating or cooling, or a mechanical load can be applied.

Phase portrait analysis also provides for additional statistical measures of the surface deformation and stress profiles, including quality indictors based on the standard deviation of the phase distribution and distribution widths based on absolute minimum/maximum ranges (in radians or in physical length) or z-score distributions, which can be used to set inspection thresholds and determine acceptable surface deformations and stress profiles at particular loads. Thus, the standard deviation and width of phase relief distribution are used as criteria for inspecting part surface quality. These methods can also be used to evaluate different coating compositions, thicknesses and application techniques, in order to increase service life and reduce maintenance costs for turbine airfoils and other precision parts with lifetime-limited applications.

While this invention has been described with reference to exemplary embodiments, it will be understood by those skilled in the art that various changes may be made and equivalents may be substituted for elements thereof without departing from the spirit and scope of the invention. In addition, modifications may be made to adapt a particular situation or material to the teachings of the invention, without departing from the essential scope thereof. Therefore, the invention is not limited to the particular embodiments disclosed herein, but includes all embodiments falling within the scope of the appended claims.

**Claims**

1.  A method comprising:

    illuminating a sample (14) with a coherent source (11);
    generating a first interference image of the sample, the first interference image representing surface stress in the sample;
    inducing a phase shift in the coherent source;
    generating a second interference image of the sample, the second interference image including carrier fringes based on the phase shift;
    inducing a load on the sample;
    generating a third interference image of the sample, the third interference image representing a change in the surface stress due to the load; and
    generating a phase distribution based on the interference images, the phase distribution representing the change in the surface stress.

2.  The method of claim 1, further comprising illuminating an optical medium (15) with the coherent source; and preferably wherein the interference images form as holographic patterns in the optical medium (15).

3.  The method of claim 1, further comprising illuminating the sample (14) with the coherent source (11); and preferably wherein the interference images form as speckle patterns on the sample (14).

4.  The method of claim 1, 2 or 3, further comprising subtracting the first interference image from the second and third interference images; and preferably further comprising performing a Fourier transform to generate spatial frequencies based on real intensity distributions of the second and third interference images; and more preferably further comprising generating a spatial spectrum as a function of a complex variable having a real part based on the real intensity distributions and an imaginary part based on a Hilbert transform of the real intensity distributions.

5.  The method of claim 4, wherein generating the phase distribution comprises calculating the phase distribution based on an arc tangent of a ratio of the imaginary and real parts of the complex variable.

6.  The method of claim 5, further comprising generating a quality indicator for the sample based on a standard deviation of the phase distribution; and preferably further comprising generating the quality indicator for the sample based on a width of the phase distribution.

7.  The method of any preceding claim, wherein generating the third interference image comprises inducing a thermal load on the sample, the third interference image representing a change in thermal stress due to the load.

8.  The method of any preceding claim comprising:

    illuminating a sample part (14) with a first coherent light source; and
    combining light from the first coherent light source with light from a second coherent light source to generate the first interference image of the sample.

9.  The method of claim 8, further comprising illuminating a holographic medium (15) with the second coherent light source, such that the interference patterns form in the holographic medium;
    or
    further comprising illuminating the sample (14) with the second coherent light source, such that the interference patterns form on the sample part; preferably wherein the first and second light sources illuminate the sample part at different angles, such that the interference patterns form as speckle interference patterns on the sample.

10. A system comprising:

    a sample (14);
    a coherent light source (11) configured to illuminate the sample to generate interference images;
    a detector (16) configured to record the interference images, wherein the interference images represent a surface (S) of the sample;

a wave plate (13) configured to induce a phase shift in the coherent light source (11), the phase shift inducing carrier fringes into the interference images;
a heater (19) configured to induce thermal stress in the sample, the thermal stress inducing displacements in the surface; and
a processor (18) configured to generate a phase distribution based on the interference images, the phase distribution representing the displacements.

11. The system of claim 10, further comprising a reversible optical medium (15) illuminated by the coherent light source (11), wherein the interference images form as holographic patterns in the reversible optical medium; or
wherein the coherent light source (11) illuminates the surface of the sample from different angles, such that the interference images form as speckle patterns on the surface (15).

12. The system of claim 10 or 11, further comprising a coating on the surface of the sample, wherein the phase distribution represents stress fault locations in the coating, based on the displacements.

13. The system of claim 10, 11 or 12, wherein the processor (18) is configured to generate a Fourier transform based on an intensity distribution of the interference images; and preferably wherein the processor (18) is configured to generate a complex variable having a real part based on the intensity distribution and a complex part based on a Hilbert transform of the intensity distribution, and wherein the phase distribution is based on an arc tangent of a ratio of the imaginary and real parts of the complex variable.

14. The system of claim 10, 11, 12, or 13 wherein the processor (18) is further configured to generate a quality indicator for the surface of the sample based on a standard deviation of the phase distribution.

15. The system of claim 14, wherein the processor (18) is further configured to generate the quality indicator based on a width of the phase distribution; and/or wherein the processor is further configured to generate the quality indicator based on a z-score of the phase distribution.

FIG. 1

Loaded – no Carrier Fringes

FIG. 2A

Unloaded – Carrier Fringes

FIG. 2B

Loaded – Carrier Fringes

FIG. 2C

## Unloaded Intensity Distribution

**FIG. 3A**

## Loaded Intensity Distribution

**FIG. 3B**

## Unloaded Phase Distribution

**FIG. 3C**

## Loaded Phase Distribution

**FIG. 3D**

Unloaded Fourier Transform

FIG. 4A

Loaded Fourier Transform

FIG. 4B

FIG. 5

Unloaded – no Filter

FIG. 6A

Loaded – no Filter

FIG. 6B

Unloaded – Filter

FIG. 6C

Loaded – Filter

FIG. 6D

FIG. 7A

Unloaded – Normal Displacement

FIG. 7B

Loaded – Normal Displacement

FIG. 7C

Unloaded – Tangential Displacement

FIG. 7D

Loaded – Tangential Displacement

Europäisches
Patentamt

European
Patent Office

Office européen
des brevets

**EUROPEAN SEARCH REPORT**

Application Number

EP 12 17 0765

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 188 482 B1 (CLOUD GARY L [US]) 13 February 2001 (2001-02-13) * column 4, line 32 - column 5, line 60; figures 1-3 * ----- | 1-11, 13-15 | INV. G01B9/02 G01B11/16 G03H1/00 |
| X | US 3 828 126 A (RAMSEY S) 6 August 1974 (1974-08-06) * column 3, line 25 - column 7, line 2; figures 1-3 * ----- | 1-15 | |
| X,P | EP 2 392 892 A1 (CANON KK [JP]) 7 December 2011 (2011-12-07) * paragraph [0026] - paragraph [0057]; figures 1-3A * ----- | 1-4,8,10 | |
| | | | TECHNICAL FIELDS SEARCHED (IPC) G01B G03H |

The present search report has been drawn up for all claims

| Place of search | Date of completion of the search | Examiner |
|---|---|---|
| Munich | 28 September 2012 | Petelski, Torsten |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

**ANNEX TO THE EUROPEAN SEARCH REPORT**

**ON EUROPEAN PATENT APPLICATION NO.**                    EP 12 17 0765

This annex lists the patent family members relating to the patent documents cited in the above-mentioned European search report.
The members are as contained in the European Patent Office EDP file on
The European Patent Office is in no way liable for these particulars which are merely given for the purpose of information.

28-09-2012

| Patent document cited in search report | | Publication date | Patent family member(s) | | Publication date |
|---|---|---|---|---|---|
| US 6188482 | B1 | 13-02-2001 | NONE | | |
| US 3828126 | A | 06-08-1974 | NONE | | |
| EP 2392892 | A1 | 07-12-2011 | EP | 2392892 A1 | 07-12-2011 |
| | | | JP | 2011257155 A | 22-12-2011 |
| | | | US | 2011299064 A1 | 08-12-2011 |

EPO FORM P0459

For more details about this annex : see Official Journal of the European Patent Office, No. 12/82